# EUROPEAN PATENT SPECIFICATION

(11) **EP 4 446 300 B1**
(45) Date of publication and mention of the grant of the patent: **26.11.2025**
(21) Application number: 23168069.5
(22) Date of filing: 14.04.2023
(51) Int. Cl.: C07B 59/00, A61K 51/08, C07F 5/06

(54) **PREPARATION METHODS OF ALUMINIUM FLUORIDE COMPLEXES**
VERFAHREN ZUR HERSTELLUNG VON ALUMINIUMFLUORIDKOMPLEXEN
PROCÉDÉS DE PRÉPARATION DE COMPLEXES DE FLUORURE D'ALUMINIUM

(43) Date of publication of application: 16.10.2024
(73) Proprietor: Trasis S.A., 4430 Ans (BE)
(72) Inventor: GENDRON, Thibault, 4000 LIEGGE (BE); WARNIER, Corentin, 4870 NESSONVAUX (BE); GERARDY, Romaric, 4030 LIEGE (BE); COCHET, Antoine, 4260 CIPLET (BE); TRUMP, Laura, 4000 LIEGE (BE); MORELLE, Jean-Luc, 4000 LIEGE (BE)
(74) Representative: AWA Benelux

(56) References cited:
- US-A1- 2012 134 920
- D'SOUZA CHRISTOPHER A. ET AL: "High-Yielding Aqueous 18 F-Labeling of Peptides via Al 18 F Chelation", BIOCONJUGATE CHEMISTRY, vol. 22, no. 9, 21 September 2011 (2011-09-21), US, pages 1793 - 1803, XP93088740, ISSN: 1043-1802, DOI: 10.1021/bc200175c
- FERSING CYRIL ET AL: "A Comprehensive Review of Non-Covalent Radiofluorination Approaches Using Aluminum [18F]fluoride: Will [18F]AlF Replace 68Ga for Metal Chelate Labeling?", MOLECULES, vol. 24, no. 16, 7 August 2019 (2019-08-07), pages 1 - 41, XP055883111, Retrieved from the Internet <URL:https://www.ncbi.nlm.nih.gov/pmc/articles/PMC6719958/pdf/molecules-24-02866.pdf> DOI: 10.3390/molecules24162866

## Description

### Field of the Invention

The invention pertains to the field of chemical synthesis. More particularly, the invention pertains to the synthesis of aluminium-fluoride complexes, or solid support, from sources of aluminium (III) that allow safe and reproducible operations in line with Good Manufacturing Practice guidelines.

### Background and Prior Art

### Aluminium fluoride complexes

Aluminium fluoride complexes ([AlFₓ]^{(3-x)+}, x = 1, 2 or 3) have numerous industrial and biological applications. The main industrial use of AlF₃ is as a temperature-regulating agent, a pH-regulator and as a solubility enhancer of aluminium oxide in an electrolyte solution in the production process of aluminium. The use of AlF₃ as such results in a lowering of the energy consumption in the aluminium pot (Greenwood N., Earnshaw, A. Chemistry of the Elements,2nd ed. Butterworth-Heinemann, Oxford (1997), p.233). The minor downstream uses of AlF₃ are for metal treatment and for optical coating as an essential component of antireflective coatings and in semiconductors.

In the biological and cellular field, aluminium fluoride complexes are used to interfere with the activity of many enzymes. They are also used to study the mechanistic aspects of phosphoryl transfer reactions, which are of fundamental importance to cells, as phosphoric acid anhydrides such as ATP and GTP control most of the reactions involved in metabolism, growth and differentiation (Wittinghofer A., Signaling mechanistics: Aluminium fluoride for molecule of the year. Current Biology 1997; 7(11): R682-R685). The observation that aluminium fluoride can bind to and activate heterotrimeric G proteins has proven to be useful for the study of G protein activation in vivo, for the elucidation of three-dimensional structures of several GTPases, and for understanding the biochemical mechanism of GTP hydrolysis, including the role of GTPase-activating proteins (Vincent S., Brouns M., Hart M., Settleman J., Evidence for distinct mechanisms of transition state stabilization of GTPases by fluoride. Proceedings of the National Academy of Sciences 1998; 95(5): 2210-2215).

In addition to their role in basic biochemistry, [AlFₓ]^{(3-x)+} complexes also have effects on human physiology. Chemical studies show that the cation Al³⁺ binds the fluoride anion F⁻ more strongly than 60 other metal ions (Martin R.B., Ternary hydroxide complexes in neutral solutions of Al3+ and F-. Biochem. Biophys. Res. Commun. (1988) 155:1194-1200). Aluminium is the most abundant metal on earth. It is ubiquitously present in all foodstuffs and drinking water. Fluoride is widely added to human drinking water (1 ppm) and in most toothpastes (500-1500 ppm) to prevent dental caries (Warren J.J., Levy S.M., A review of fluoride dentifrice related to dental fluorosis. Pediatr. Dent. (1999) 21:265-271). It is well-known that fluoride affects bone physiology (Farley J.R., Wergedal J.E., Baylink D.J. Fluoride directly stimulates proliferation and alkaline phosphatase activity of boneforming cells. Science (1983) 222:330-332). It is prescribed as a drug to treat osteoporosis (Ringe J.D., Rovati L.C., Treatment of osteoporosis in men with fluoride alone or in combination with bisphosphonates. Calcif. Tissue Int. (2001) 69:252-255). Recent research strongly indicates that [AlFₓ]^{(3-x)+} might be the active species that affects bone cell biology in vivo (Li L., The biochemistry and physiology of metallic fluoride: action, mechanism, and implications. Crit. Rev. Oral. Biol. Med. (2003) 14(2):100-114).

### Positron Emission tomography (PET) and [¹⁸F]-AlF labeling

The synthesis of aluminium fluoride complexes has also been found of great interest in the field of Positron Emission Tomography (PET) imaging where the technique is used to label molecules with radioactive [¹⁸F][AlFₓ]^{(3-x)+} complexes. PET is a useful imaging technique that can produce three-dimensional images of processes in the body. PET measures the physiological function by observing blood flow, metabolism, neurotransmitters and radiolabeled agents. This imaging technique is based on the indirect detection of gamma rays and radiation emitted by a radioactive agent that is injected into the body.

Of all the positron emitters available for PET, fluorine-18 (¹⁸F) is the most ideal due to its favourable decay scheme. The half-life of this radionuclide (110 min) allows time for multistep radiolabeling reaction and for delivery of ¹⁸F-labelled tracers to distant user sites. Moreover, the short positron range (2.3 mm) in tissue and the ideal decay process (97% positron emission) contribute to offer high resolution images. As a result, the vast majority of PET tracers used in the clinic are ¹⁸F-labelled molecules. However, the radiochemistry of fluorine-18, i.e. the synthetic methods to incorporate the fluorine atom into molecule of interests, is not straightforward. A typical way to achieve such a labelling would be to create a carbon-fluorine bond by displacement of a leaving group. Unfortunately, this chemistry usually requires anhydrous organic solvent, harsh reaction conditions (thermal activation), slow labelling kinetics, or complex precursors, all of which have hampered the development of novel ¹⁸F-radiotracers.

In 2009, McBride et al. (McBride W.J., Sharkey R.M., Karacay H., D'Souza C.A., Rossi E.A., Laverman P., Chang C.H., Boerman O.C., Goldenberg D.M., A novel method of 18F radiolabeling for PET. J Nucl Med. (2009) 50:991-8; D'Souza, C.A., McBride, W.J., Sharkey, R.M., Todaro, L.J., Goldenberg, D.M., High-Yielding Aqueous 18F-Labeling of Peptides via Al18F Chelation. Bioconjug. Chem. (2011) 22:1793-1803; McBride W.J., Goldenberg D.M., Methods and compositions for improved F-18 labeling of proteins, peptides and other molecules*.* Patent application WO 2008/088648), followed by Laverman et al. (Laverman, P., McBride, W.J., Sharkey, R.M., Eek, A., Joosten, L., Oyen, W.J.G., Goldenberg, D.M., Boerman, O.C.A., A Novel Facile Method of Labeling Octreotide with 18F-fluorine. J. Nucl. Med. (2010) 51:454-461) initially proposed a novel approach to circumvent these limitations. In this strategy, that uses the fluorophilic nature of aluminium, the [18F]fluorine atom, instead of being covalently bound to a carbon, is reacted with aluminium(III) chloride (AlCl₃) to yield a positively charged aluminium-fluoride complex ([¹⁸F]AlF²⁺). This positively charged intermediate behaves similarly to a metal ion and can therefore be complexed by a suitably designed chelator cage, conjugated to a vector molecule of interest (e.g. octreotide; Kumar, K.; Ghosh, A., 18F-AlF Labeled Peptide and Protein Conjugates as Positron Emission Tomography Imaging Pharmaceuticals. Bioconjug. Chem. (2018), 29, 953-975).

This new approach relies on simpler precursors, made from preassembled chelator building blocks, benefits from milder labelling conditions, and is usually compatible with mixtures of water and organic co-solvents. The later makes it very appealing for the labelling of biomolecules and peptidomimetics which are notoriously difficult to label through conventional 18F-chemistry. These multiple advantages prompted the development of several new radiotracers labelled with aluminium-[¹⁸F]fluoride complexes, some of which showed promising results in clinical trial and are being progressed toward final approval (Pauwels, E., Cleeren, F., Tshibangu, T., Koole, M., Serdons, K., Dekerve, J., Van Cutsem, E., Verslype, C., Van Laere, K., Bormans, G., Al18F-NOTA-octreotide: First comparison with 68Ga-DOTATATE in a neuroendocrine tumor patient. Eur. J. Nucl. Med. Mol. Imaging (2019) 46:2398-2399; Jiang, X., Wang, X., Shen, T., Yao, Y., Chen, M., Li, Z., Li, X., Shen, J., Kou, Y., Chen, S., FAPI-04 PET/CT Using [18F]AlF Labeling Strategy: Automatic Synthesis, Quality Control, and In Vivo Assessment in Patient. Front. Oncol. (2021) 11:649148; Archibald S.J., Allot L., The aluminium-[18F]fluoride revolution: simple radiochemistry with a big impact for radiolabeled biomolecules. AJNMMI radiopharm. chem. (2021) 6:30).

A slight variation of this strategy is highlighted in the work of Vogg *et al.* in 2021 (Kang D., Simon U., Mottaghy F.M., Vogg T.J., Labelling via [Al18F]2+ Using Precomplexed Al-NODA Moieties. Pharmaceuticals (2021) 14:818) in which parameters and benefits of splitting this simple process in two steps are explored. In a first step, the aluminium cation Al³⁺ is coordinated to the precursor cage, followed by labelling of this Al bearing precursor with aqueous [¹⁸F]fluoride in a second step, thus avoiding free aluminium ions in the labelling system.

### Aluminium Chloride

The aluminium halides and aluminium nitrates have similar properties with the exception of the family of aluminium fluoride compounds. Of the remaining members in this aluminium halide family, chloride derivatives are the most commercially important. Aluminium chloride is a chemical compound with the chemical formula AlCl₃. The chemistry of aluminium (III) chloride is influenced significantly by hydration. Aluminium (III) chloride hexahydrate, AlCl₃ · 6H₂O, is a crystalline solid that dissolves easily in water, forming ionic species. Anhydrous aluminium (III) chloride, AlCl₃, is a hygroscopic, yellowish or grayish-white, crystalline powder with a sharp odor, that reacts violently with water, evolving heat, a gas consisting of hydrogen chloride and steam, and aluminium oxide particulates. The uses of anhydrous aluminium (III) chloride and the hydrated form are also very different. The anhydrous material is the most commonly used Lewis acid used as an alkylation catalyst. The hydrate is used principally as a flocculating aid (Grams G., Conley B., Shaikh T., Atwood, D. Aluminum Halides and Aluminum Nitrate. (2004) In book: Kirk-Othmer Encyclopedia of Chemical Technology; New Jersey Department of Health, *Hazardous Substance Fact Sheet: Aluminium Chloride* CAS: 7446-70-0, Rev. 2008). Thus, anhydrous AlCl₃ is required to react with [¹⁸F]fluorine atoms. Commercially, aluminium (III) chloride is available as the anhydrous AlCl₃, as the hexahydrate, AlCl₃ · 6H₂O, or as a 28% aqueous solution.

Document US 2012/134920 A1 discloses compositions and methods of synthesis and use of 18F or 19F-labeled molecules of use in PET, SPECT and/or MR imaging. Preferably, the 18F or 19F is conjugated to a targeting molecule by formation of a complex with a group IIIA metal and binding of the complex to a bifunctional chelating agent, which may be directly or indirectly attached to the targeting molecule. In other embodiments, the 18F or 19F labeled moiety may comprise a targetable construct used in combination with a bispecific antibody to target a disease-associated antigen. The disclosed methods and compositions allow the simple and reproducible labeling of molecules at very high efficiency and specific activity in 30 minutes or less. In preferred embodiments, the labeled molecule may be used for imaging in a subject without purification after labeling.

In D'Souza Christopher A. et al : "High-yielding aqueous 18F-labeling of peptides via Al 18F chelation", Bioconjug. Chem. 2011 Sep 21;22(9):1793-803, the coordination chemistry of a new pentadentate bifunctional chelator (BFC), NODA-MPAA 1, containing the 1,4,7-triazacyclononane-1,4-diacetate (NODA) motif with a methylphenylacetic acid (MPAA) backbone, and its ability to form stable Al(18)F chelates were investigated. The organofluoroaluminates were easily accessible from the reaction of 1 and AIF(3). X-ray diffraction studies revealed aluminum at the center of a slightly distorted octahedron, with fluorine occupying one of the axial positions. The tert-butyl protected prochelator 7, which can be synthesized in one step, is useful for coupling to biomolecules on solid phase or in solution. High yield (55-89%) aqueous (18)F-labeling was achieved in 10-15 min with a tumor-targeting peptide 4 covalently linked to 1. Defluorination was not observed for at least 4 h in human serum at 37 °C. These results demonstrate the facile application of Al(18)F chelation using BFC 1 as a versatile labeling method for radiofluorinating other heat-stable peptides for positron emission imaging.

Fersing C., Bouhlel A., Cantelli C., Garrigue P., Lisowski V., Guillet B., A comprehensive review of non-covalent radiofluorination approaches using aluminum [18F]fluoride: will [18F]AlF replace 68Ga for metal chelate labeling? Molecules 2019, 24, 2866, 41 pages, provide a comprehensive overview of [¹⁸F]AlF labeling applications through a description of the various [¹⁸F]AlF-labeled conjugates, from their radiosynthesis to their evaluation as PET imaging agents. With the identification of NODA and NOTA analogs as preferential chelators for an easy and high-yielded radiolabeling, efforts were then concentrated on the development of a labeling protocol applicable to a NOTA-peptide lyophilisate formulated in a kit. In the example of IMP485, the formulation contained peptide (20 nmol, nearly 2 equiv.), AlCl₃ (12 nmol, 1 equiv.), ascorbic acid and potassium hydrogen phthalate as buffers and α,α-trehalose dehydrate as a filling agent. [¹⁸F]F⁻ was added in a mixture of NaCl 0.9% and ethanol (1:1; 400 µL total volume). After heating at 110 °C for 15 min, the radioconjugate was purified on hydrophilic-lipophilic balance (HLB) or alumina cartridge. The [¹⁸F]F⁻ quality seemed to significantly influence the labeling effectiveness: indeed, fluorine-18 solution directly recovered from the cyclotron outlet contains different contaminants (essentially metallic traces) and therefore needs to be purified before being used to form [¹⁸F]AlF. The use of radiopharmaceutical grade sodium [¹⁸F]fluoride ([¹⁸F]NaF), indicated for bone imaging, can also be an alternative, although expensive. Contrary to the [¹⁸F]fluoride directly isolated from the cyclotron, this product already passed through a cation exchange separation step and an anion exchange cartridge purification.

### Problem to be solved

Despite these numerous medical applications, few attempts have been made to optimize the synthesis of aluminium-fluoride in a safe, scalable and reproducible way which would be required for the production of Active Pharmaceutical Ingredient (API) according to Good Manufacturing Practice (GMP) guidelines. To date, all the reported processes for the synthesis of aluminium-fluoride complexes rely on the use of either highly reactive, hazardous material or harsh reaction conditions.

Similarly, the method originally described by McBride *et al.* and used in all ¹⁸F-labelling protocols reported to date, is based on the use of aluminium(III) chloride (McBride W.J., Sharkey R.M., Karacay H., D'Souza C.A., Rossi E.A., Laverman P., Chang C.H., Boerman O.C., Goldenberg D.M., A novel method of 18F radiolabeling for PET. J Nucl Med. (2009) 50:991-8; D'Souza, C.A., McBride, W.J., Sharkey, R.M., Todaro, L.J., Goldenberg, D.M., High-Yielding Aqueous 18F-Labeling of Peptides via Al18F Chelation. Bioconjug. Chem. (2011) 22:1793-1803; McBride W.J., Goldenberg D.M., Methods and compositions for improved F-18 labeling of proteins, peptides and other molecules*.* Patent application WO 2008/088648; D'Souza C.A., McBride W.J., Goldenberg D.M., Methods and compositions for improved f-18 labeling of proteins, peptides and other molecules*.* Patent application WO2012/082618; McBride W.J., Goldenberg D.M., Improved methods and compositions for f-18 labeling of proteins, peptides and other molecules*.* Patent application PCT/US2008/062108; Laverman, P., McBride, W.J., Sharkey, R.M., Eek, A., Joosten, L., Oyen, W.J.G., Goldenberg, D.M., Boerman, O.C.A., A Novel Facile Method of Labeling Octreotide with 18F-fluorine. J. Nucl. Med. (2010) 51:454-461; Kumar, K.; Ghosh, A., 18F-AlF Labeled Peptide and Protein Conjugates as Positron Emission Tomography Imaging Pharmaceuticals. Bioconjug. Chem. (2018), 29, 953-975; Pauwels, E., Cleeren, F., Tshibangu, T., Koole, M., Serdons, K., Dekerve, J., Van Cutsem, E., Verslype, C., Van Laere, K., Bormans, G., Al18F-NOTA-octreotide: First comparison with 68Ga-DOTATATE in a neuroendocrine tumor patient. Eur. J. Nucl. Med. Mol. Imaging (2019) 46:2398-2399; Jiang, X., Wang, X., Shen, T., Yao, Y., Chen, M., Li, Z., Li, X., Shen, J., Kou, Y., Chen, S., FAPI-04 PET/CT Using [18F]AlF Labeling Strategy: Automatic Synthesis, Quality Control, and In Vivo Assessment in Patient. Front. Oncol. (2021) 11:649148; Archibald S.J., Allot L., The aluminium-[18F]fluoride revolution:simple radiochemistry with a big impact for radiolabelled biomolecules. AJNMMI radiopharm. chem. (2021) 6:30; Kang D., Simon U., Mottaghy F.M., Vogg T.J., Labelling via [Al18F]2+ Using Precomplexed Al-NODA Moieties. Pharmaceuticals (2021) 14:818; Ducan H., Bard I., Peter I., Eberhard G.M., Rajiv B., Anthony W., HER2 binding peptides labeled with aluminium-18 fluoride complexed by NOTA*.* Patent application WO2012087908).

Because of its hygroscopic behavior, anhydrous aluminium (III) chloride powders strongly adsorb water from air humidity, increasing their cohesion and decreasing their flowability, which makes them difficult to handle precisely. Due to its reactivity versus water, prolonged storage of anhydrous aluminium (III) chloride in closed containers may result in spontaneous decomposition or explosion as over time a pressure build-up from HCl in the container can occur. Containers should thus be carefully vented before being opened. Safety goggles or face shields, rubber gloves, rubber shoes, and coveralls made of acid-resistant material should be used in handling (Grams G., Conley B., Shaikh T., Atwood, D. Aluminum Halides and Aluminum Nitrate. (2004) In book: Kirk-Othmer Encyclopedia of Chemical Technology). Aluminium (III) chloride reacts with moisture in the skin, in the eyes, ears, nose, and throat. Fumes resulting from exposure of anhydrous aluminium (III) chloride to moisture are corrosive and acidic. Collection systems should be provided to conduct aluminium (III) chloride dusts or gases to a scrubbing device.

Although manageable at the level of a research laboratory, such methods using anhydrous aluminium (III) chloride as a starting material are difficult to translate for industrial production, in particular if the process is used for the synthesis of a drug substance for which the regulation and quality criteria to meet are very stringent. The GMP guidelines requires "that part of quality assurance which ensures that products are consistently produced and controlled to the quality standards appropriate to their intended use and as required by the marketing authorization" (Chaloner-Larsson G., Anderson R., Egan A., A World Health Organization (WHO) guide to good manufacturing practice (GMP) requirements. WHO/VSQ/97.02 (1997)). In other words, the guiding principle of GMP is that quality is built in to a product, and not just tested in to a product. Therefore, the assurance is that the product not only meets the final specifications, but that it has been made by the same procedures under the same conditions each and every time it is made.

In this context, the use of aluminium (III) chloride for the synthesis of aluminium fluoride complexes dedicated to medical applications poses the following problems:
- safety risk associated with the storage and handling of AlCl₃ ;
- difficulties to ensure reliable and repeatable weighing of AlCl₃ ;
- difficulties to establish reliable quality control (QC) methods of the AlCl₃ ;
- large variability in quality of the AlCl3, between batches of a same supplier and between suppliers ;
- the chloride counterion introduced with AlCl₃ may be detrimental to certain applications, in particular in the field of ¹⁸F-labelling where excess chloride could compete with traces amount of [¹⁸F]fluoride and therefore drastically reduce the efficacy of the overall labelling process or generate unwanted side-products or impurities (Schlyer D.J., Bastos M.A., Alexoff D., Wolf A.P., Separation of [1aF]Fluoride from [180]Water Using Anion Exchange Resin. Appl. Radiat. Isot. (1990) 41(6):531-533).

### Aims of the Invention

The present invention aims at finding a method to form aluminium-fluoride complexes starting from a more stable and well characterized source of aluminium (III) which would certainly circumvent all these limitations associated with the use of aluminium (III) chloride.

The use of more stable and well characterized source of aluminium (III) would furthermore ease the production of stable cold-kit for [¹⁸¹⁹F]AlF labeling. Kits of the type used to make radiopharmaceuticals containing radioactive metals (e.g. Tc-99m, Re-186, Re-188, Ga-68, etc.) normally include at least one ligand capable of bonding to the radioactive metal, and auxiliary substances such as anti-oxidants, stabilizers and bulking agents, all combined and stored in a lyophilized condition. Kits are lyophilized and sealed, and are, therefore, sterile, pyrogen-free, and must be able to be stored for a long time, thus requiring stable raw materials. This approach offers convenience and ease of use, simply adding the required activity in a certain volume of eluate, with or without the need for heating (Nowotnik D.P., Physico-chemical concepts in the preparation of technetium radiopharmaceuticals. In: Sampson CB, editor. Textbook of Radiopharmacy, Theory and Practice, 2nd ed. Amsterdam, NL: Gordon and Breach Science Publishers (1994) p.29-50.). Main drawbacks are radiation exposure, higher amount of precursor usually needed and few kits currently established and even fewer commercially available. To date, the few kits for [¹⁸F]-AlF labeling are all based on the hazardous aluminium (III) chloride (Wan W. et al., First Experience of 18F-Alfatide in Lung Cancer Patients Using a New Lyophilized Kit for Rapid Radiofluorination. J. Nucl. Med. (2013) 54(5):691-698; McBride, W.J. D'Souza, C.A., Karacay, H., Sharkey, R.M., Goldenberg, D.M., New Lyophilized Kit for Rapid Radiofluorination of Peptides. Bioconjug. Chem. (2012) 23:538-547).

### Summary of the Invention

The method of the present invention allows the chemical synthesis of aluminium-fluoride complexes, [AlFₓ]^{(3-x)+}, dedicated to medical applications. The method consists in synthesizing an aluminium-fluoride complex comprising:
- trapping a fluoride anion onto a solid-phase extraction cartridge ;
- forming the aluminium-fluoride complex in situ by passing a solution of aluminium(III) and counterions other than chloride(I) through the said solid-phase extraction cartridge, or by passing a solution of a chelate bearing molecule precomplexed with aluminium (III) obtained from treating said chelate bearing molecule with a salt made of aluminium(III) and counterions other than chloride(I), said fluoride being [¹⁹F]fluoride or radioactive [¹⁸F]fluoride.

In some embodiments, the solid-phase is an anion-exchange resin.

In some embodiments, counterions of aluminium(III) are selected from the group consisting of bromide, iodide, nitrate, phosphate, sulfate, sulphonate, hydroxide, any anionic salt of natural and non-natural amino acids, 2,4-pentanedionate, 8-hydroxyquinoline, acetate, acrylate, ascorbate, aspartate, benzenesulfonate, benzoate, besylate, bitartrate, camphorsulfonate, citrate, decanoate, esylate, fumarate, gentisate, gluconate, glutamate, glutarate, glycolate, hexanoate, hydroxynaphthoate, isethionate, lactate, lactobionate, malate, maleate, malonate, mandelate, mesylate, methylsulfate, methylsulfonate, mucate, napsylate, octanoate, oleate, oxalate, pamoate, pantothenate, phthalate, polygalacturonate, propionate, salicylate, stearate, succinate, tartrate, teoclate, toluenesulfonate, trifluoroacetate, trifluoromethanesulfonate, and any combination of thereof.

In some preferred embodiments, the source of aluminium(III) is aluminium(III) glycinate dihydroxide or aluminium (III) lactate.

In another embodiment, the method of the present invention comprises:
- the provision of a kit which includes at least:
   i. a cassette containing at least a solid-phase extraction cartridge meant to isolate the fluoride anion from the ¹⁸O-water and a reaction vessel ;
   ii. a vial containing an aluminium(III) salt with counterions other than chloride in a suitable buffered solvent mixture, or a vial containing a chelate bearing molecule precomplexed with aluminium (III) obtained from treating said chelate bearing molecule with a salt made of aluminium(III) and counterions other than chloride(I), dissolved in a suitable buffered solvent mixture ;
- in situ formation of the aluminium-fluoride complex by eluting the trapped fluoride anion from the solid-phase extraction cartridge with the aluminium salt buffered solution or with the chelate bearing molecule precomplexed with aluminium buffered solution.

In some embodiment, the suitable buffered solvent mixture is made of a buffer selected from the group of HEPES, MES, acetate, ascorbate, oxalate, phtalate, lactate, gentisate, glutamate, glycinate, and phosphate, dissolved in pure saline, or dissolved in a mixture of saline and of a suitable organic solvent such as but not limited to acetonitrile, ethanol, methanol, DMSO, DMF, DMA.

In some other embodiments, the kit may also contain:
- a vial containing a non-radioactive chelate-functionalized targeting agent precursor to be labelled with the aluminium-fluoride complex ;
- a radical scavenger, also called radioprotectant ;
- one or a combination of several solid-phase extraction cartridge(s) for purification of the ^{18/19}F-[AlFₓ]^{(3-x)+} labeled precursor ; and
- suitable solvents for a final product formulation.

In some preferred embodiments, the radical scavenger is selected from the group of ascorbic acid, gentisic acid, potassium iodide, sodium iodide, TEMPO, BHT, the suitable solvents for the final product purification and formulation is selected from the group of ethanol, acetonitrile, methanol, MeCN, DMF, DMA, THF, saline, water for injection and any combination thereof, and the solid-phase extraction cartridge for purification is selected from the group of C18, tC18, C8, Alumina, CN, Diol, HLB, Porapak RDX, NH2, CM, MAX, WAX, MCX, WCX, Strata^{™}-X, Strata^{™}-XL, Strata^{™}-X-C, Strata^{™}-X-CW, Strata^{™}-X-A, Strata^{™}-X-AW (Strata^{™}-X, from Phenomenex) and any combination of thereof.

In some aspect of the present invention, the in situ formation of the aluminium-complex is performed while heating the solid-phase on which the fluoride-anion is trapped.

In some embodiments, solid-phase extraction cartridges meant to isolate the ^{18/19}F-fluoride anion from the ¹⁸O-water and to purify the ^{18/19}F-[AlFₓ]^{(3-x)+} labeled precursor can be used up to 6 times.

Also disclosed herein is that the solid phase is packed in a flow-chemistry reactor and the reaction is carried out in continuous flow.

### Brief Description of the Drawings

Fig. 1 represents the chemical structure of aluminium(III) glycinate dihydroxide.
Fig. 2 represents the chemical structure of aluminium(III) lactate.

### Description of a Preferred Embodiments of the Invention

The present invention relates to a method to synthesize an aluminium-fluoride complex, [AlFₓ]^{(3-x)+}, by reacting together a salt made of aluminium(III) and counterions other than chloride(I) with a fluoride anion or by reacting together a chelate bearing molecule precomplexed with aluminium (III), obtained from treating said chelate bearing molecule with a salt made of aluminium(III) and counterions other than chloride(I), with fluoride anion.

According to the present invention, the source of fluorine is [¹⁹F]fluoride or radioactive [¹⁸F]fluoride, as isotopes of an element have same chemical properties.

In some embodiments of the present disclosure, counterions of aluminium(III) are selected from the group consisting of bromide, iodide, nitrate, phosphate, sulfate, sulphonate, hydroxide, any anionic salt of natural and non-natural amino acids, 2,4-pentanedionate, 8-hydroxyquinoline, acetate, acrylate, ascorbate, aspartate, benzenesulfonate, benzoate, besylate, bitartrate, camphorsulfonate, citrate, decanoate, esylate, fumarate, gentisate, gluconate, glutamate, glutarate, glycolate, hexanoate, hydroxynaphthoate, isethionate, lactate, lactobionate, malate, maleate, malonate, mandelate, mesylate, methylsulfate, methylsulfonate, mucate, napsylate, octanoate, oleate, oxalate, pamoate, pantothenate, phthalate, polygalacturonate, propionate, salicylate, stearate, succinate, tartrate, teoclate, toluenesulfonate, trifluoroacetate, trifluoromethanesulfonate, and any combination of thereof.

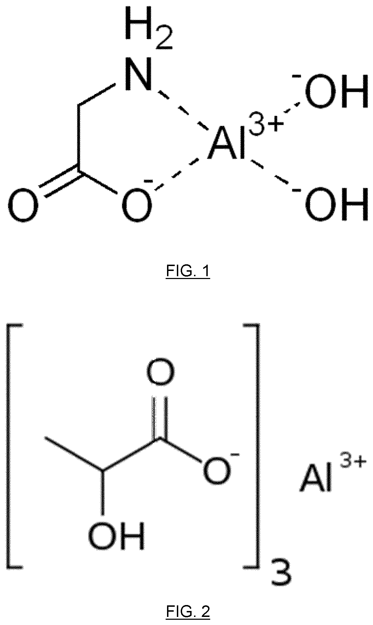

In a preferred embodiment, the source of aluminium(III) is aluminium(III) glycinate dihydroxide (Figure 1) or aluminium(III) lactate (Figure 2).

The synthesis of the aluminium-fluoride complex, [AlFₓ]^{(3-x)+}, using the method according to the present disclosure may be carried out manually, or using an automated radiosynthesizer. Homemade or commercially available automated radiosynthesizers are designed for use in an appropriate hot cell that provides suitable radiation shielding to protect the operator from potential radiation dose. When using a cassette, the automated radiosynthesizer can produce a variety of different radiopharmaceuticals with minimal risk of cross-contamination by simply changing the cassette. This approach also has the advantage of simplifying set-up, thereby reducing the risk of operator error, allowing the cassette to be changed quickly between runs, and improving compliance with GMP regulations, which is the purpose of the present invention.

The term "cassette" means an equipment unit constructed so that the entire unit fits removably and interchangeably on an automatic synthesizer device (as defined above) in such a way that the mechanical movement of moving parts of the synthesizer controls the operation of the cassette from outside the cassette. Suitable cassettes consist of a linear array of valves, each connected to a port to which reagents or vials can be connected, either by needle insertion into a vial sealed with an inverted septum or by gas-tight connectors. The cassette is versatile as it usually has several positions where reagents can be attached, as well as several positions suitable for attaching syringes or chromatography cartridges (e.g. for solid phase extraction or SPE). The cassette always includes at least one reaction vessel.

Also disclosed is a method of preparation of an aluminium-fluoride complex, [AlFₓ]^{(3-x)+}, as explained above which comprises:
- the provision of a kit which includes at least:
   i. a cassette containing at least a solid-phase extraction cartridge meant to isolate the ^{18/19}F-fluoride anion from the ¹⁸O-water and a reaction vessel ;
   ii. a vial containing an aluminium(III) salt with counterions other than chloride in a suitable buffered solvent mixture, or a vial containing a chelate bearing molecule precomplexed with aluminium (III) obtained from treating said chelate bearing molecule with a salt made of aluminium(III) and counterions other than chloride(I), dissolved in a suitable buffered solvent mixture ;
   iii. a suitable solvent to elute the ^{18/19}F-fluoride anion from solid-phase extraction cartridge.
- the elution of the trapped ^{18/19}F-fluoride anion from the solid-phase extraction cartridge to the reaction vessel with the suitable solvent ;
- the reaction of the eluted ^{18/19}F-fluoride anion with the aluminium (III) salt or with the chelate bearing molecule precomplexed with aluminium (III) in the reaction vessel to form the aluminium-fluoride complex.

In some embodiments, the solid-phase is an anion-exchange resin, the suitable buffered solvent mixture is made of a buffer selected from the group of HEPES, MES, acetate, ascorbate, oxalate, phtalate, lactate, gentisate, glutamate, glycinate, and phosphate, dissolved in pure saline, or dissolved in a mixture of saline and of a suitable organic solvent such as but not limited to acetonitrile, ethanol, methanol, DMSO, DMF, DMA, and the suitable solvent for ^{18/19}F-fluoride elution is pure saline, or a mixture of saline and of a suitable organic solvent such as but not limited to acetonitrile, ethanol, methanol, DMSO, DMF, DMA.

Moreover, the kit may also contain a non-radioactive chelate-functionalized targeting agent precursor to be labeled with the aluminium-fluoride complex, a radical scavenger (also called radioprotectant), a single or a combination of several solid-phase extraction cartridge(s) for purification of the ^{18/19}F-[AlFₓ]^{(3-x)+} labeled precursor and suitable solvents for the final product purification and formulation.

The radical scavenger is preferably selected from the group of ascorbic acid, gentisic acid, potassium iodide, sodium iodide, TEMPO, and BHT, wherein the suitable solvents for the final product purification and formulation is preferably selected from the group of ethanol, acetonitrile, methanol, MeCN, DMF, DMA, THF, saline, water for injection and any combination thereof, and wherein the solid-phase extraction cartridge for purification is preferably selected from the group of C18, tC18, C8, Alumina, CN, Diol, HLB, Porapak RDX, NH2, CM, MAX, WAX, MCX, WCX, Strata^{™}-X, Strata^{™}-XL, Strata^{™}-X-C, Strata^{™}-X-CW, Strata^{™}-X-A, Strata^{™}-X-AW (Strata^{™}-X, from Phenomenex) and any combination thereof.

In another aspect the problem underlying the present invention is solved by a method of synthesizing an aluminium-fluoride complex in situ on the solid-phase extraction cartridge meant to isolate the ^{18/19}F-fluoride anion from the ¹⁸O-water by performing elution of the trapped ^{18/19}F-fluoride to the reaction vessel with the aluminium (III) salt buffered solution or with the chelate bearing molecule precomplexed with aluminium (III) buffered solution. In another embodiment, the in situ formation of the aluminium-fluoride complex is performed while heating the solid-phase cartridge on which the ^{18/19}F-fluoride anion is trapped.

In another embodiment, the kit comprises all the reagents required to produce at least two and up to six batches of the ^{18/19}F-[AlFₓ]^{(3-x)+} labeled precursor on the same cassette.

### EXAMPLES (examples 1-9 are not according to the invention, examples 10-13 represent the invention)

### Examples 1-9: Synthesis of [AlFx]^{(3-x)+} complexes and subsequent labeling starting from various aluminium(III) salts

### General procedure

A stock solution of the aluminium(III) salt was prepared by dissolving the aluminium(III) salt (00025 mol) in 1 M sodium acetate buffer (pH 4.0, 50 mL). The resulting solution was stored in a plastic container at 4 °C before use in the following reaction.

A solution of [¹⁸F]fluoride in ¹⁸O-water (150-400 MBq) was passed through a SepPak QMA light cartridge previously conditioned with 0.9% saline. The [¹⁸F]fluoride was subsequently released into a reaction vessel using a solution of 0.9% saline in acetonitrile. To this was added the stock solution of aluminium(III) salt (10.8 µL) that had been pre-diluted with 300 µL of a solution of ascorbic acid (1 mg) in a mixture of acetonitrile/water, yielding the immediate formation of the [¹⁸F]AlF complex. This was then reacted *in situ* with 400 µL of a mixture of acetonitrile/water containing 1 mg of ascorbic acid and 133 µg (100 nmol) of NOTA-TATE precursor, *i.e.* 2,2',2"-(1,4,7-triazacyclononane-1,4,7-triyl)triacetic acid-dPhe-Cys-Tyr-dTrp-Lys-Thr-Cys-Thr with disulfide bridge between Cys² and Cys⁷ and trifluoroacetate counterion. The reaction was heated to 100 °C for 10 min. Purification of the crude through Solid Phase Extraction (SepPak tC18 plus short) cartridge afforded the target product aluminium [¹⁸F]fluoride NOTA TATE in competitive non-decay-corrected radiochemical yield.

### Results

| **Ex. #** | **Aluminium (III) salt** | **Starting ¹⁸F activity (MBq)** | **Non-decay-corrected yield** |
|---|---|---|---|
| **1** | Aluminium (III) chloride (AlCl₃) (baseline) | 150-400 | 46.8 ± 5.5% *(n = 5)* |
| **2** | aluminium (III) lactate (Al(C₃H₅O₃)₃) | 150-400 | 39.0 ± 3.0 % *(n* = *2)* |
| **3** | aluminium (III) nitrate (Al(NO₃)₃) | 231 | 51.0 % *(n* = *1)* |
| **4** | aluminium (III) trifluoromethanesulfonate (TFMS) (CF₃SO₃)₃Al | 227 | 51.0 % *(n* = *1)* |
| **5** | aluminium (III) iodide (AlI₃) | 208 | 43.0 % *(n* = *1)* |
| **6** | aluminium (III) bromide (AlBr₃) | 224 | 49.0 % *(n* = *1)* |
| **7** | aluminium (III) 2,4-pentanedionate (Al(C₅H₇O₂)₃) | 248 | 42.0 % *(n* = *1)* |
| **8** | aluminium (III) glycinate (H₂NCH₂COOAl(OH)₂) | 253 | 37.0 % *(n* = *1)* |
| **9** | aluminium (III) tris(8-hydroxyquinoline) (Al(C₉H₆NO)₃) | 174 | 31.0 % *(n* = *1)* |

### Conclusion

These examples prove that the synthesis of several ¹⁸F-[AlFx]^{(3-x)+} complexes from aluminium (III) salts with counterions other than chloride and subsequent labeling is at least as efficient as starting from AlCl₃.

### Examples 10 - 13: Synthesis of [AlFₓ]^{(3-×)+} complexes directly on the QMA anion exchange cartridge

### General procedure

A stock solution of an aluminium(III) salt was prepared by dissolving the aluminium(III) salt (00025 mol) in 1 M sodium acetate buffer (pH 4.0, 25 mL). 40.5 µL of the resulting solution were then added to 500 µL of a mixture of saline 0.9%/acetonitrile.

A solution of [¹⁸F]fluoride in ¹⁸O-water (300 MBq) was passed through a SepPak QMA light cartridge previously conditioned with 0.9% saline. The [¹⁸F]AlF complex was formed on the cartridge and subsequently released into a reaction vessel by passing the solution of aluminium (III) salt in saline 0.9% and acetonitrile. This was then reacted *in situ* with 400 µL of a mixture of acetonitrile/water containing 1 mg of ascorbic acid and 133 µg (100 nmol) of NOTA-TATE precursor, *i.e.* 2,2',2"-(1,4,7-triazacyclononane-1,4,7-triyl)triacetic acid-dPhe-Cys-Tyr-dTrp-Lys-Thr-Cys-Thr with disulfide bridge between Cys² and Cys⁷ and trifluoroacetate counterion. The reaction was heated to 100 °C for 10 min. Purification of the crude through Solid Phase Extraction (SepPak tC18 plus short) cartridge afforded the target product aluminium [¹⁸F]fluoride NOTA TATE in competitive non-decay-corrected radiochemical yield.

### Results

| **Ex. #** | **Aluminium (III) salt** | **Starting ¹⁸F activity (MBq)** | **Non-decay-corrected yield** |
|---|---|---|---|
| **10** | Aluminium (III) chloride (AlCl₃) (baseline) | 295 | 44.1 % *(n* = *1)* |
| **11** | aluminium (III) glycinate (H₂NCH₂COOAl(OH)₂) | 307 | 47.2 % *(n* = *1)* |
| **12** | aluminium (III) trifluoromethanesulfonate (TFMS) (CF₃SO₃)₃Al | 257 | 44.0 % *(n* = *1)* |
| **13** | aluminium (III) lactate (Al(C₃H₅O₃)₃) | 239 | 55.0 % *(n* = *1)* |

### Conclusion

These examples prove that the synthesis of ¹⁸F-[AlFₓ]^{(3-x)+} complexes can be carried out *in situ* directly on the solid phase anion exchange cartridge.

### Examples 14-15: Dual run

### General procedure

A stock solution of an aluminium(III) salt was prepared by dissolving aluminium(III) salt (00025 mol) in 1 M sodium acetate buffer (pH 4.0, 25 mL). The resulting solution was stored in a plastic container at 4 °C before use in the following reaction.

### Run 1

A solution of [¹⁸F]fluoride in ¹⁸O-water (250-300 MBq) was passed through a SepPak QMA light cartridge previously conditioned with 0.9% saline. The [¹⁸F]fluoride was subsequently released into a reaction vessel using a solution of 0.9% saline in acetonitrile. To this was added the stock solution of aluminium(III) salt (10.8 µL) that had been pre-diluted with 300 µL of a solution of ascorbic acid (1 mg) in acetonitrile/water, yielding the immediate formation of the [¹⁸F]AlF complex. This was then reacted *in situ* with 400 µL of a mixture of acetonitrile/water containing 1 mg of ascorbic acid and 133 µg (100 nmol) of NOTA-TATE precursor, *i.e.* 2,2',2"-(1,4,7-triazacyclononane-1,4,7-triyl)triacetic acid-dPhe-Cys-Tyr-dTrp-Lys-Thr-Cys-Thr with disulfide bridge between Cys² and Cys⁷ and trifluoroacetate counterion. The reaction was heated to 100 °C for 10 min. Purification of the crude through Solid Phase Extraction (SepPak tC18 plus short) cartridge afforded the target product aluminium [¹⁸F]fluoride NOTA TATE in competitive non-decay-corrected radiochemical yield.

The SepPak cartridges, the syringes used for fluid handling, the reaction vessel and the liquid transfer lines used as part of the radioactive experiment were then rinsed several times with water for injection.

### Run 2

The procedure described for *Run 1* was then repeated using the rinsed SepPak cartridges, syringes, reaction vessel and liquid transfer lines. This afforded the target product aluminium [¹⁸F]fluoride NOTA TATE in competitive non-decay-corrected radiochemical yields.

### Results

| **Ex. #** | **Aluminium (III) salt** | **Starting ¹⁸F activity (MBq)** | **Non-decay-corrected yield** |
|---|---|---|---|
| **14.1** | Aluminium (III) chloride (AlCl₃) (baseline) - Run 1 | 253 | 55.0 % *(n* = *1)* |
| **14.2** | Aluminium (III) chloride (AlCl₃) (baseline) - Run 1 | 290 | 48.1 % *(n* = *1)* |
| **15.1** | aluminium (III) lactate (Al(C₃H₅O₃)₃) Run 1 | 291 | 42.0 % *(n* = *1)* |
| **15.2** | aluminium (III) lactate (Al(C₃H₅O₃)₃) Run 2 | 288 | 27.2 % *(n* = *1)* |

### Conclusion

The methodology exposed within the present invention is applicable to multiple runs.

## Claims

1. A method for synthesizing an aluminium-fluoride complex comprising the steps of:
- trapping a fluoride anion onto a solid-phase extraction cartridge ;
- forming the aluminium-fluoride complex in situ by passing a solution of salt made of aluminium(III) and counterions other than chloride(I) through the said solid-phase extraction cartridge, or by passing a solution of a chelate bearing molecule precomplexed with aluminium (III) obtained from treating said chelate bearing molecule with a salt made of aluminium(III) and counterions other than chloride(I) ;
said fluoride being [¹⁹F]fluoride or radioactive [¹⁸F]fluoride.

2. The method according to claim 1, wherein the solid-phase extraction cartridge used is an anion-exchange resin.

3. The method according to claim 1, wherein counterions of aluminium(III) are selected from the group consisting of bromide, iodide, nitrate, phosphate, sulfate, sulphonate, hydroxide, any anionic salt of natural and non-natural amino acids, 2,4-pentanedionate, 8-hydroxyquinoline, acetate, acrylate, ascorbate, aspartate, benzenesulfonate, benzoate, besylate, bitartrate, camphorsulfonate, citrate, decanoate, esylate, fumarate, gentisate, gluconate, glutamate, glutarate, glycolate, hexanoate, hydroxynaphthoate, isethionate, lactate, lactobionate, malate, maleate, malonate, mandelate, mesylate, methylsulfate, methylsulfonate, mucate, napsylate, octanoate, oleate, oxalate, pamoate, pantothenate, phthalate, polygalacturonate, propionate, salicylate, stearate, succinate, tartrate, teoclate, toluenesulfonate, trifluoroacetate, trifluoromethanesulfonate, and any combination thereof.

4. The method according to claim 1, wherein the aluminium(III) salt is aluminium(III) glycinate dihydroxide or aluminium(III) lactate.

5. The method according to claim 1, comprising:
- the provision of a kit which includes at least:
i. a cassette containing at least a solid-phase extraction cartridge meant to isolate the fluoride anion from ¹⁸O-water and a reaction vessel ;
ii. a vial containing an aluminium(III) salt with counterions other than chloride in a suitable buffered solvent mixture, or a vial containing a chelate bearing molecule precomplexed with aluminium (III) obtained from treating said chelate bearing molecule with a salt made of aluminium(III) and counterions other than chloride(I), dissolved in a suitable buffered solvent mixture ;
- in situ formation of the aluminium-fluoride complex by eluting the trapped fluoride anion from the solid-phase extraction cartridge with the aluminium salt buffered solution or with the chelate bearing molecule precomplexed with aluminium buffered solution.

6. The method according to claim 5, wherein the suitable buffered solvent mixture is made of a buffer selected from the group consisting of HEPES, MES, acetate, ascorbate, oxalate, phtalate, lactate, gentisate, glutamate, glycinate, and phosphate, dissolved in pure saline, or dissolved in a mixture of saline and of a suitable organic solvent such as but not limited to acetonitrile, ethanol, methanol, DMSO, DMF, DMA.

7. The method according to claim 5, wherein the kit also contains:
- a vial containing a non-radioactive chelate-functionalized targeting agent precursor to be labelled with the aluminium-fluoride complex ;
- a radical scavenger, also called radioprotectant ;
- one or a combination of several solid-phase extraction cartridge(s) for purification of the ^{18/19}F-[AlFₓ]^{(3-x)+} labeled precursor;
- suitable solvents for a final product formulation.

8. The method according to claim 7, wherein the radical scavenger is selected from the group consisting of ascorbic acid, gentisic acid, potassium iodide, sodium iodide, TEMPO, and BHT, wherein the suitable solvents for the final product purification and formulation are selected from the group of ethanol, acetonitrile, methanol, MeCN, DMF, DMA, THF, saline, water for injection or any combination thereof, and wherein the solid-phase extraction cartridge for purification is selected from the group of C18, tC18, C8, Alumina, CN, Diol, HLB, Porapak RDX, NH2, CM, MAX, WAX, MCX, WCX, Strata^{™}-X, Strata^{™}-XL, Strata^{™}-X-C, Strata^{™}-X-CW, Strata^{™}-X-A, Strata^{™}-X-AW and any combination thereof.

9. The method according to claim 5, wherein the *in situ* formation of the aluminium-fluoride complex is performed while heating the solid-phase extraction cartridge on which the fluoride anion is trapped.

10. The method according to any of claims 1 to 9, wherein the solid-phase extraction cartridges meant to isolate the 18/19F-fluoride anion from ¹⁸O-water and to purify the ^{18/19}F-[AlFₓ]^{(3-x)+} labelled precursor is used up to 6 times.

## Patentansprüche

1. Verfahren zum Synthetisieren eines Aluminium-Fluorid-Komplexes, umfassend die folgenden Schritte:
- Einfangen eines Fluoridanions auf einer Festphasenextraktionskartusche;
- Bilden des Aluminium-Fluorid-Komplexes *in situ* durch Durchleiten einer Salzlösung aus Aluminium(III) und anderen Gegenionen als Chlorid(I) durch die Festphasenextraktionskartusche oder durch Durchleiten einer Lösung eines chelathaltigen Moleküls, das mit Aluminium(III) vorkomplexiert ist, das durch Behandeln des chelathaltigen Moleküls mit einem Salz aus Aluminium(III) und anderen Gegenionen als Chlorid(I) erlangt wird;
wobei das Fluorid [¹⁹F]Fluorid oder radioaktives [¹⁸F]Fluorid ist.

2. Verfahren nach Anspruch 1, wobei die verwendete Festphasenextraktionskartusche ein Anionenaustauschharz ist.

3. Verfahren nach Anspruch 1, wobei die Aluminium(III)-Gegenionen ausgewählt sind aus der Gruppe, bestehend aus Bromid, Iodid, Nitrat, Phosphat, Sulfat, Sulfonat, Hydroxid, einem beliebigen anionischen Salz natürlicher und nichtnatürlicher Aminosäuren, 2,4-Pentandionat, 8-Hydroxychinolin, Acetat, Acrylat, Ascorbat, Aspartat, Benzolsulfonat, Benzoat, Besylat, Bitartrat, Camphersulfonat, Citrat, Decanoat, Esylat, Fumarat, Gentisat, Gluconat, Glutamat, Glutarat, Glycolat, Hexanoat, Hydroxynaphthoat, Isethionat, Lactat, Lactobionat, Malat, Maleat, Malonat, Mandelat, Mesylat, Methylsulfat, Methylsulfonat, Mucat, Napsylat, Octanoat, Oleat, Oxalat, Pamoat, Pantothenat, Phthalat, Polygalacturonat, Propionat, Salicylat, Stearat, Succinat, Tartrat, Teoclat, Toluolsulfonat, Trifluoracetat, Trifluormethansulfonat und eine beliebige Kombination davon.

4. Verfahren nach Anspruch 1, wobei das Aluminium(III)-Salz Aluminium(III)-Glycinatdihydroxid oder Aluminium(III)-Lactat ist.

5. Verfahren nach Anspruch 1, umfassend:
Bereitstellen eines Kits, das mindestens Folgendes beinhaltet:
i. eine Kassette, die mindestens eine Festphasenextraktionskartusche, die dazu bestimmt ist, das Fluoridanion aus ¹⁸O-Wasser zu isolieren, und ein Reaktionsgefäß enthält;
ii. ein Fläschchen, das ein Aluminium(III)-Salz mit anderen Gegenionen als Chlorid in einem geeigneten gepufferten Lösungsmittelgemisch enthält, oder ein Fläschchen, das ein mit Aluminium(III) vorkomplexiertes chelathaltiges Molekül enthält, das durch Behandeln des chelathaltigen Moleküls mit einem Salz aus Aluminium(III) und anderen Gegenionen als Chlorid(I), gelöst in einem geeigneten gepufferten Lösungsmittelgemisch, erlangt wird;
- *in-situ-*Bilden des Aluminium-Fluorid-Komplexes durch Eluieren des eingefangenen Fluoridanions aus der Festphasenextraktionskartusche mit der gepufferten Aluminiumsalzlösung oder mit dem chelathaltigen Molekül, das mit der gepufferten Aluminiumlösung vorkomplexiert ist.

6. Verfahren nach Anspruch 5, wobei das geeignete gepufferte Lösungsmittelgemisch aus einem Puffer besteht, der ausgewählt ist aus der Gruppe, bestehend aus HEPES, MES, Acetat, Ascorbat, Oxalat, Phthalat, Lactat, Gentisat, Glutamat, Glycinat und Phosphat, und in reiner Kochsalzlösung oder in einem Gemisch aus Kochsalzlösung und einem geeigneten organischen Lösungsmittel, wie beispielsweise Acetonitril, Ethanol, Methanol, DMSO, DMF und DMA, gelöst ist.

7. Verfahren nach Anspruch 5, wobei das Kit auch Folgendes enthält:
- ein Fläschchen, das einen angestrebten nicht radioaktiven, chelatfunktionalisierten Vorläufer des Mittels enthält, das mit dem Aluminium-Fluorid-Komplex markiert werden soll;
- einen Radikalfänger, auch Strahlenschutzmittel genannt;
- eine oder eine Kombination mehrerer Festphasenextraktionskartusche(n) zur Aufreinigung des ^{18/19}F-[AlFx]^{(3-x)+} markierten Vorläufers;
- geeignete Lösungsmittel für eine Endproduktformulierung.

8. Verfahren nach Anspruch 7, wobei der Radikalfänger ausgewählt ist aus der Gruppe, bestehend aus Ascorbinsäure, Gentisinsäure, Kaliumiodid, Natriumiodid, TEMPO und BHT, wobei die geeigneten Lösungsmittel für die Endproduktaufreinigung und -formulierung ausgewählt sind aus der Gruppe, bestehend aus Ethanol, Acetonitril, Methanol, MeCN, DMF, DMA, THF, Kochsalzlösung, Wasser für Injektionszwecke oder eine beliebige Kombination davon, und wobei die Festphasenextraktionskartusche für die Aufreinigung ausgewählt ist aus der Gruppe von C18, tC18, C8, Aluminiumoxid, CN, Diol, HLB, Porapak RDX, NH2, CM, MAX, WAX, MCX, WCX, Strata^{™}-X, Strata^{™}-XL, Strata^{™}-X-C, Strata^{™}-X-CW, Strata^{™}-X-A, Strata^{™}-X-AW und einer beliebigen Kombination davon.

9. Verfahren nach Anspruch 5, wobei das *in-situ-*Bilden des Aluminium-Fluorid-Komplexes während eines Erhitzens der Festphasenextraktionskartusche durchgeführt wird, auf der das Fluoridanion eingefangen ist.

10. Verfahren nach einem der Ansprüche 1 bis 9, wobei die Festphasenextraktionskartuschen, die dazu bestimmt sind, das 18/19F-Fluoridanion aus ¹⁸O-Wasser zu isolieren und den als ^{18/19}F-[AlFx](3-x) markierten Vorläufer aufzureinigen, bis zu sechsmal verwendet werden.

## Revendications

1. Procédé de synthèse d'un complexe aluminium-fluorure comprenant les étapes consistant à :
- piéger un anion fluorure sur une cartouche d'extraction en phase solide ;
- former le complexe aluminium-fluorure in situ en faisant passer une solution de sel constitué d'aluminium(Ill) et de contre-ions autres que le chlorure(I) à travers ladite cartouche d'extraction en phase solide, ou en faisant passer une solution d'une molécule chélatée précomplexée avec de l'aluminium(Ill) obtenue par traitement de ladite molécule chélatée avec un sel constitué d'aluminium(Ill) et de contre-ions autres que le chlorure(I) ;
ledit fluorure étant le fluorure [¹⁹F] ou le fluorure [¹⁸F] radioactif.

2. Procédé selon la revendication 1, **caractérisé en ce que** la cartouche d'extraction en phase solide utilisée est une résine échangeuse d'anions.

3. Procédé selon la revendication 1, **caractérisé en ce que** les contre-ions d'aluminium(Ill) sont choisis parmi le groupe constitué du bromure, iodure, nitrate, phosphate, sulfate, sulfonate, hydroxyde, un quelconque sel anionique d'acides aminés naturels et non naturels, 2,4-pentanedionate, 8-hydroxyquinoléine, acétate, acrylate, ascorbate, aspartate, benzènesulfonate, benzoate, bésylate, bitartrate, camphosulfonate, citrate, décanoate, ésylate, fumarate, gentisate, gluconate, glutamate, glutarate, glycolate, hexanoate, hydroxynaphtoate, iséthionate, lactate, lactobionate, malate, maléate, malonate, mandélate, mésylate, sulfate de méthyle, sulfonate de méthyle, mucate, napsylate, octanoate, oléate, oxalate, pamoate, pantothénate, phtalate, polygalacturonate, propionate, salicylate, stéarate, succinate, tartrate, téoclate, toluènesulfonate, trifluoroacétate, trifluorométhanesulfonate, et une quelconque combinaison de ceux-ci.

4. Procédé selon la revendication 1, **caractérisé en ce que** le sel d'aluminium(lll) est le dihydroxyde de glycinate d'aluminium(Ill) ou le lactate d'aluminium(III).

5. Procédé selon la revendication 1, comprenant :
- la fourniture d'un kit qui comprend au moins :
i. une cassette contenant au moins une cartouche d'extraction en phase solide destinée à isoler l'anion fluorure de l'eau enrichie en ¹⁸O et un récipient de réaction ;
ii. un flacon contenant un sel d'aluminium(III) avec des contre-ions autres que le chlorure dans un mélange de solvants tamponnés approprié, ou un flacon contenant une molécule chélatée précomplexée avec de l'aluminium(III) obtenue par traitement de ladite molécule chélatée avec un sel constitué d'aluminium(III) et de contre-ions autres que le chlorure(I), dissous dans un mélange de solvants tamponnés approprié ;
- la formation in situ du complexe aluminium-fluorure par élution de l'anion fluorure piégé de la cartouche d'extraction en phase solide avec la solution tamponnée de sel d'aluminium ou avec la molécule chélatée précomplexée avec une solution tamponnée d'aluminium.

6. Procédé selon la revendication 5, **caractérisé en ce que** le mélange de solvants tamponnés approprié est constitué d'un tampon choisi dans le groupe constitué de HEPES, MES, acétate, ascorbate, oxalate, phtalate, lactate, gentisate, glutamate, glycinate et phosphate, dissous dans une solution saline pure, ou dissous dans un mélange de solution saline et d'un solvant organique approprié, tel que, sans s'y limiter, acétonitrile, éthanol, méthanol, DMSO, DMF, DMA.

7. Procédé selon la revendication 5, **caractérisé en ce que** le kit contient également :
- un flacon contenant un précurseur d'agent de ciblage fonctionnalisé par un chélate non radioactif à marquer avec le complexe aluminium-fluorure ;
- un piégeur de radicaux, également appelé radioprotecteur ;
- une ou une combinaison de plusieurs cartouches d'extraction en phase solide pour la purification du précurseur marqué au ^{18/19}F-[ALFₓ]^{(3-x)+} ;
- des solvants appropriés pour une formulation de produit final.

8. Procédé selon la revendication 7, **caractérisé en ce que** le piégeur de radicaux est choisi dans le groupe constitué de l'acide ascorbique, acide gentisique, iodure de potassium, iodure de sodium, TEMPO et BHT, dans lequel les solvants appropriés pour la purification et la formulation de produit final sont choisies dans le groupe constitué de l'éthanol, acétonitrile, méthanol, MeCN, DMF, DMA, THF, une solution saline, de l'eau pour injection ou une quelconque combinaison de ceux-ci, et **caractérisé en ce que** la cartouche d'extraction en phase solide pour la purification est choisie dans le groupe constitué du C18, tC18, C8, alumine, CN, diol, HLB, Porapak RDX, NH2, CM, MAX, WAX, MCX, WCX, Strata^{™}-X, Strata^{™}-XL, Strata^{™}-X-C, Strata^{™}-X-CW, Strata^{™}-X-A, Strata^{™}-X-AW et une quelconque combinaison de ceux-ci.

9. Procédé selon la revendication 5, **caractérisé en ce que** la formation *in situ* du complexe aluminium-fluorure est réalisée pendant le chauffage de la cartouche d'extraction en phase solide sur laquelle l'anion fluorure est piégé.

10. Procédé selon l'une quelconque des revendications 1 à 9, **caractérisé en ce que** les cartouches d'extraction en phase solide destinées à isoler l'anion fluorure ^{18/19}F de l'eau enrichie en ¹⁸O et à purifier le précurseur marqué au ^{18/19}F-[AlFₓ](3-x)⁺ sont utilisées jusqu'à 6 fois.
